Europäisches Patentamt

European Patent Office

Office européen des brevets

(11) Publication number: **0 117 721**
**B1**

(12) **EUROPEAN PATENT SPECIFICATION**

(45) Date of publication of patent specification: **07.01.88**

(51) Int. Cl.⁴: **F 01 D 5/28, F 01 D 5/04**

(21) Application number: **84301163.6**

(22) Date of filing: **23.02.84**

(54) **A method of producing a radial type ceramic turbine rotor.**

(30) Priority: **24.02.83 JP 28632/83**

(43) Date of publication of application:
**05.09.84 Bulletin 84/36**

(45) Publication of the grant of the patent:
**07.01.88 Bulletin 88/01**

(84) Designated Contracting States:
**DE FR GB IT SE**

(56) References cited:
**EP-A-0 052 913**
**WO-A-81/03047**
**FR-A-1 325 267**

**PATENT ABSTRACTS OF JAPAN, vol. 5, no. 37
(M-58), 10th March 1980**

**SAE TECHNICAL PAPER SERIES:
"Development of silicon nitride turbine rotors",
1985**

(73) Proprietor: **NGK INSULATORS, LTD.
2-56, Suda-cho, Mizuho-ku
Nagoya-shi, Aichi 467 (JP)**

(72) Inventor: **Mizuno, Takeyuki
118, Higashiodawara-Cho
Toyohashi City (JP)**

(74) Representative: **Paget, Hugh Charles Edward
et al
MEWBURN ELLIS & CO. 2/3 Cursitor Street
London EC4A 1BQ (GB)**

Courier Press, Leamington Spa, England.

**Description**

This invention relates to a method of producing a radial type ceramic turbine rotor.

Recently, silicon ceramic materials such as silicon nitride, silicon carbide, sialon and the like have been tried as structural materials for gas turbines, diesel engines and the like, because of their light weight and superiority in resistance to heat and thermal shock. Particularly, radial type turbine rotors made of these ceramic materials have been highlighted for applications to gas turbine rotors or turbo charger rotors for automobiles, because these ceramic rotors are lighter and able to be used at much higher temperatures than metal rotors and are superior in thermal efficiency to metal rotors. Moreover, as the radial type turbine rotors are complicated in shape, they are usually molded by injection molding or the like which forces the ceramic materials into narrow or curved portions or corners of complicated shapes. See, for example Japanese laid-open patent application no. 55—161902.

We have now discovered a particular problem.

In order to form the rotors by injection molding of the ceramic materials, however, a great amount of plasticizer such as resin, wax or the like must be added into the ceramic material. When the injection molded ceramic rotor body is heated or sintered to remove the resin or wax, the shape in the proximity of the connection between the hub and the blade portion of the gas exit side so rapidly changes that the resin or wax added as the plasticizer are not uniformly removed. Accordingly, the molded body is not uniform in density, so that locally different shrinkages occur in the body in sintering so as to cause tensile forces and hence cracks particularly in the connection between the hub and blade portion on the gas exit side.

WO—A—8103047 describes the problem of plasticizer removal in turbine rotors and proposes the formation of central recesses in the hub and shaft portions. No attention is paid to the connection of hub and blade portions.

It is an object of the invention to provide an improved method of producing a radial type ceramic turbine rotor which reduces or prevents the tendency to formation of cracks. Thus paticularly, we have found that there is a need to avoid cracks in a circular connection between the blade portion and the hub on the gas exit side of the rotor.

The invention is set out in claim 1.

The sintering of the turbine rotor may take place at a normal (conventional) pressure.

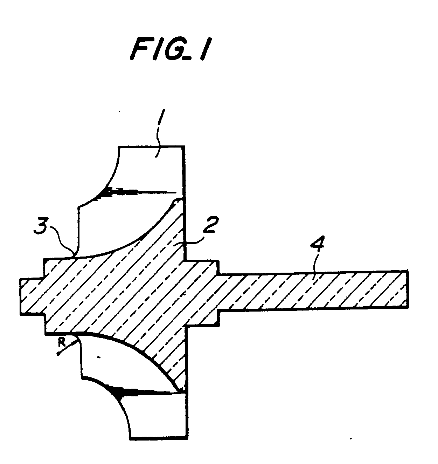

Embodiments of the invention will now be described by way of non-limitative example with reference to the appended drawings in which the single figure, Fig. 1, is an illustration in axial section of a radial type turbine rotor made by a method embodying the invention.

The ceramic turbine rotor of Fig. 1 consists of a shaft portion 4, a hub 2, integrally connected to the shaft portion 4 and a blade portion 1 radially extending from and integrally formed with the hub 2. A gas is exhausted by the rotor in a direction from the right to the left as viewed in Fig. 1 in which direction the end of the hub 2 extends somewhat from the end of the blade portion 1. A reference numeral 3 illustrates a concave fillet formed at a circular connection between the hub 2 and the blade portion 1.

The method of producing a ceramic turbine rotor according to the invention may be carried out in the following manner. The rotor is preferably made of at least one material selected from silicon nitride, silicon carbide, sialon or substances producing these materials by sintering, and preferably includes a plasticizer such as a resin, wax or the like and further preferably is mixed with at least one sintering aid such as $Y_2O_3$, $MgAl_2O_4$, MgO, $CeO_2$, SrO or the like in the case of the silicon nitride and such as Be, Al, B, C or the like in the case of the silicon carbide to obtain a raw material for molding. This prepared raw material is injection molded by the use of injection molding dies to obtain a molded rotor body. The injection molding dies are previously adjusted so that the fillet 3 of the rotor body molded in the dies at the circular connection between the blade portion 1 and the hub 2 of the shaft portion 4 on the gas exit side of the rotor has a concave surface whose radius of curvature R is after sintering more than 3 mm, preferably not more than 10 mm and more preferably in the range 4—6 mm as shown in Fig. 1.

The molded rotor body is then heated to remove the plasticizer such as the resin and wax or the like up to a temperature in the range 300—600°C at a heating rate slower than 100°C/hr, preferably slower than 10°C/hr, these heating conditions being dependent upon the kinds and amounts of the plasticizer contained in the body. After the removal of the plasticizer, if required, hydrostatic pressure is applied to the rotor body after presintering. The presintering is effected at 800—1,200°C in order to facilitate handling the rotor body and give it a strength required to be machined. In applying the hydrostatic pressure, the molded rotor body after the presintering is covered by an elastic bag and then the hydrostatic pressure 500—5,000 kg/cm² is applied to the covered rotor body to make it dense. Thereafter, the molded rotor body is sintered under a normal pressure such as the atmospheric pressure for 10—200 minutes at a temperature, for example 1,600—2,200°C which is sufficient to sinter the body completely depending upon the raw material. In the case of using as a starting material a substance producing the silicon nitride, silicon carbide or sialon when sintering, important parameters for obtaining good results are not only the sintering temperature but the atmosphere for the sintering. For example, nitrogen atmosphere is used for the silicon nitride and argon atmosphere for the silicon carbide. In this manner, the obtained radial type ceramic turbine rotor has the fillet 3 formed at the circular connection between the blade portion 1 and the hub 2 on the gas exit side of the rotor, which has a concave surface having a radius of curvature more than 3 mm without any crack in the fillet after sintering. The rotor can be provided with a shaft at the opposite side from the exit side of the rotor. Such a shaft can be formed using the process described in EP—A1—0052913, within the present invention.

Moreover, the reason why the fillet 3 formed at the circular connection between the blade portion and the hub on the gas outlet side after sintering is given a radius of curvature more than 3 mm is that a radius of curvature of the fillet less than 3 mm causes an abrupt change in thickness of the fillet, resulting in uneven plasticizer removal and hence uneven density in the fillet. The uneven density also causes locally different shrinkages in the fillet, so that cracks occur in the fillet due to tensile stresses. Curvature of not more than 10 mm is preferred, because the curvature more than 10 mm generally tends to lower the aerodynamic characteristics.

The effect of the invention will be explained with reference to examples hereinafter.

To prepare a raw material for injection molding, the following materials were mixed and kneaded, 100 parts by weight of powder $Si_3N_4$ having an average grain diameter of 0.5 μm, 3 parts by weight of MgO, 2 parts by weight of SrO and 2 parts by weight of $CeO_2$ as sintering aids and 15 parts by weight of polypropylene resin as a plasticizer. The material thus obtained was injection molded with dies to form ceramic turbine rotors each having a maximum blade diameter 60 mm (after firing) and various radii of curvature (as shown in Table 1) of the fillet at the connection between the hub and blade portion on the gas exit side of the rotor. Thereafter, the molded rotor bodies were heated to 500°C at a heating rate 5°C/hr and maintained at 500°C for 10 hours to remove the plasticizer. Then the rotor bodies, held in rubber bags, were subjected to hydrostatic pressure at 3,000 kg/cm². The bodies were then sintered in a nitrogen atmosphere at 1,720°C for 30 minutes.

The number of cracks occurring in the rotors are indicated in Table 1. In the rotors (samples Nos. 1—4) having more than 3 mm radii of curvature at the fillets in accordance with the invention, no crack occurred, while in the rotors (samples Nos. 5 and 6) having radii less than 3 mm of curvatures at the fillets, cracks having lengths of 3 and 6 mm occurred, respectively.

In order to carry out rotation tests, these rotors were ground so as to be dynamically balanced to a dynamic unbalance of 0.05 g·cm. After metal shafts had been secured to the rotors, they were again adjusted to a dynamic unbalance of 0.001 g·cm. The rotors were then tested on a rotation testing machine with progressive increase of rotational speed. The rotors Nos. 1—4 according to the invention did not rupture even at 150,000 RPM, while the conventional rotors Nos. 5 and 6 ruptured at approximately 70,000 RPM or less.

TABLE 1

|  | Sample No. | Radius of curvature at fillet mm | Occurrence of crack and its length mm | Result of rotating test |
|---|---|---|---|---|
| Rotors according to the present invention | 1 | 10 | no | did not rupture at 150,000 RPM |
|  | 2 | 6 | no | did not rupture at 150,000 RPM |
|  | 3 | 4.5 | no | did not rupture at 150,000 RPM |
|  | 4 | 3 | no | did not rupture at 150,000 RPM |
| Comparative rotors | 5 | 2 | yes, 3 | ruptured at 70,000 RPM |
|  | 6 | 0.5 | yes, 6 | ruptured at 50,000 RPM |

As can be seen from the above description, the radial type ceramic turbine rotor produced by a method according to the invention is integrally formed in one piece, e.g. by injection molding, so as to have more than a 3 mm radius of curvature at a fillet at a connection between a hub and a blade portion on a gas exit side of the rotor. There can thus be obtained a high strength ceramic turbine rotor completely precluding cracks particularly in the fillet where cracks are apt to occur. Rotors produced according to the invention can thus be particularly suitable as a turbo-charger rotor for diesel and gasoline engines and as rotors for gas turbine engines.

**Claims**

1. A method of producing a radial type ceramic turbine rotor having a hub (2) and a plurality of blade portions (1) integrally formed with said hub, there being a surface of the hub (2) on the gas exit side of the rotor extending away from the end surface of said blade portions in the proximity of said hub, comprising the steps of injection molding a ceramic material including plasticizer to form a one piece green turbine rotor including said hub and said blade portions, removing the plasticizer included in the green rotor and sintering the green rotor to form the turbine rotor, wherein in the molding a fillet (3) with a concave surface is formed between each said blae portion (1) and said hub (2) on the gas exit side of the rotor characterized in that the radius of cuvature (R) of said concave surface of the fillet is at least 3 mm after sintering.

2. A method according to claim 1 wherein said radius of curvature (R) after sintering is not more than 10 mm.

3. A method according to claim 1 wherein said radius of curvature (R) after sintering is in the range 4 to 6 mm.

4. A method according to any one of claims 1 to 3 wherein the ceramic material injection molded is one or more of silicon nitride, silicon carbide, sialon and substances producing these materials when sintered.

**Patentansprüche**

1. Verfahren zur Herstellung eines keramischen radial Turbinenrotors, der eine Nabe (2) und eine Vielzahl von mit der Nabe einstückig ausgebildeten Schaufelbereichen (1) aufweist, wobei sich eine Oberfläche der Nabe (2) auf der Gasaustrittsseite des Rotors von der Endfläche der Schaufelbereiche in der Nähe der Nabe wegerstreckt, bestehend aus den Schritten: Spritzgießen eines einen Weichmacher enthaltenden karamischen Materials zur Ausformung eines einstückigen Turbinenrotorrohlings, der die Nabe und die Schaufelbereiche aufweist, Beseitigen des in dem Rotor enthaltenen Weichmachers und Sintern des Rotorrohlings zur Bildung des Turbinenrotors, wobei beim Gießen eine Ausrundung (3) mit einer konkaven Fläche zwischen jedem Schaufelbereich (1) und der Nabe (2) auf der Gasaustrittsseite des Rotors gebildet wird, dadurch gekennzeichnet, daß der Krümmungsradius (R) der konkaven Fläche der Ausrundung nach dem Sintern mindestens 3 mm beträgt.

2. Verfahren nach Anspruch 1, wobei der Krümmungsradius (R) nach dem Sintern nicht größer als 10 mm ist.

3. Verfahren nach Anspruch 1, wobei der Krümmungsradius (R) nach dem Sintern im Bereich von 4—6 mm liegt.

4. Verfahren nach einem der Ansprüche 1 bis 3, wobei das zum Spritzgießen verwendete Material Silikonnitrid, Silikoncarbid, Sialon und/oder Stoffe enthält, die diese Materialien beim Sintern bilden.

**Revendications**

1. Un procédé de fabrication d'un rotor de turbine en céramique du type radiale ayant un moyeu (2) et un certain nombre de parties formant lame (1) intégralement formées avec ledit moyeu, une surface du moyeu (2) au côté de sortie des gaz du rotor existant et s'étandant hors de la surface d'extrémité desdites parties formant lame à proximité dudit moyeu, comprenant les étapes de mouler par injection une matière céramique comprenant un plastifiant pour former un rotor de turbine en une pièce brute comportant ledit moyeu et lesdites parties formant lame, retirer le plastifiant inclus dans le rotor brut et fritter le rotor brut pour former le rotor de turbine, dans lequel lors du moulage un arrondi (3) à surface concave est formé entre chacune desdites portions formant lame (1) et ledit moyeu (2) au côté de sortie des gaz du rotor caractérisé en ce que les rayons de courbure (R) de ladite surface concave de l'arrondi est d'au moins 3 mm après frittage.

2. Un procédé selon la revendication 1 où le rayon précité de courbure (R) après frittage n'est pas supérieur à 10 mm.

3. Un procédé selon la revendication 1 où le rayon précité de courbure (R) après frittage est dans la gamme de 4 à 6 mm.

4. Un procédé selon l'une des revendications 1 à 3 où la matière céramique moulée par injection est un ou plusieurs de nitrure de silicone, de carbure de silicone, de sialon et de substances produisant ces matériaux lorsque frittés.

## FIG. 1